# EUROPÄISCHE PATENTSCHRIFT

(11) **EP 2 310 181 B1**
(45) Veröffentlichungstag und Bekanntmachung des Hinweises auf die Patenterteilung: **25.04.2012**
(21) Anmeldenummer: 09741900.6
(22) Anmeldetag: 08.05.2009
(51) Int. Cl.: B29C 49/48, B29C 49/70, B29C 49/52

(54) **Mehrteiliges Blasformwerkzeug, Verfahren zur Herstellung eines Hohlkörpers, Hohlkörper, sowie Extrusionsblasmaschine**
Multi-part blow mould, method for producing a hollow body, hollow body and extrusion blow moulding machine
Outil de moulage par soufflage comprenant plusieurs pièces pour fabriquer un corps creux, corps creux et machine d'extrusion-soufflage

(30) Priorität: 09.05.2008 CH 715082008
(43) Veröffentlichungstag der Anmeldung: 20.04.2011
(73) Patentinhaber: Alpla-Werke Alwin Lehner GMBH & Co.KG, 6971 Hard (AT)
(72) Erfinder: KÜNZ, Johann, A-6971 Hard (AT)
(74) Vertreter: Hasler, Erich
(86) Internationale Anmeldenummer: PCT/EP2009/003293
(87) Internationale Veröffentlichungsnummer: WO 2009/135682

(56) Entgegenhaltungen:
- EP-A- 0 432 916
- US-A- 3 364 521
- US-A- 4 815 960
- US-A- 6 106 762
- US-A1- 2006 177 533
- DATABASE WPI Week 199551 Thomson Scientific, London, GB; AN 1995-400221 XP002497355 & JP 07 276483 A (YOSHIDA K) 24. Oktober 1995 (1995-10-24)

## Beschreibung

Die vorliegende Erfindung betrifft ein mehrteiliges Blasformwerkzeug, ein Verfahren zur Herstellung eines Hohlkörpers, insbesondere einer Tube, einen Hohlkörper, sowie eine Extrusionsblasmaschine.

Es ist bekannt, Tuben aus Kunststoff herzustellen. Hierzu kann das Extrusionsblasverfahren benutzt werden, bei dem zuerst ein plastisch verformbarer Kunststoffschlauch in eine zweigeteilte Blasform hinein extrudiert und dann Luft in die mit dem Schlauch geschlossene Blasform gedrückt, wodurch der Kunststoff sich gegen die Formwand legt und dort abkühlt und erstarrt. Dieses Verfahren hat allerdings den Nachteil, dass an gegenüberliegenden Seiten der Tube die Trennebenen der eingesetzten Blasformen als Trennnähte sichtbar sind. Die sichtbaren Ränder werden als ästhetisch unerwünscht angesehen, zumal die Ränder auch nach dem drauffolgenden Dekorieren der Tuben noch sichtbar bleiben.

Aus diesem Grund benutzt eine verbreitete Art der Tubenherstellung ein Verfahren, bei dem von einem extrudierten Schlauch die gewünschten Längenabschnitte abgeschnitten werden, die anschließend mit einem Tubenkopfstück verbunden werden. Dieses Verfahren erfordert einen relativ hohen Aufwand, da die Tube zweiteilig hergestellt wird und anschließend Kopfstück und Schlauch verbunden bzw. angeformt werden. Dieses Verfahren hat den Vorteil, dass der Tubenkörper keine Ränder aufweist. Allerdings ist das Herstellverfahren bedeutend aufwändiger als das zuerst beschriebene Herstellverfahren.

Andere übliche Produktionsverfahren zur Herstellung derartiger Tuben sind beispielsweise die Herstellung von rohrabschnittförmigen Vorformlingen aus einem Folienmaterial, das anschließend mit einem spritzgußtechnisch hergestellten Mündungsabschnitt mit angeformter Schulter verschweißt wird. Ebenfalls existieren Extrusionsverfahren und sogenannte Tiefziehverfahren, bei denen die tubenartigen Körper aus spritzgußtechnisch hergestellten Vorformlingen produziert -werden.

Die JP-A-07 276483 offenbart ein Blasformwerkzeug zur Herstellung eines Hohlkörpers in Gestalt einer Flasche mit einem mittleren Werkzeugsegment zur Herstellung eines nahtlosen Hohlkörperabschnitts mit angeformter Schulter, einem oberen zweigeteilten Werkzeugsegment zur Herstellung eines Halses des Hohlkörpers mit einem Schraubverschluss, und einem unteren zweigeteilten Werkzeugsegment zur Bildung eines Bodens des Hohlkörpers. Mit dem mittleren Werkzeugsegment wird der eigentliche Hohlkörper mit Schulterabschnitt hergestellt. Bei der Herstellung des Hohlkörpers wird zunächst ein Schlauch exdrudiert und in das senkrecht stehende Blasformwerkzeug eingelassen. Danach werden die oberen und unteren Blasformwerkzeughälften geschlossen und das untere Ende des überstehenden Schlauchs abgequetscht. Auf der gegenüberliegenden Seite wird der Schlauch mittels eines Messers durchtrennt. Danach wird das Oberteil des Hohlkörpers mit dem Ausguss vorgeblasen. Anschliessend wird der Blas- und Kalibrierdorn in die vorgeblasene Hohlkörperöffnung eingeführt, und der Hohlkörper zur endgültigen Form aufgeblasen. Danach werden die oberen und unteren zweigeteilten Blasformwerkzeughälften wieder geöffnet und der Hohlkörper unten entnommen. Eine Entnahme auf der Seite des Ausgussteils ist nicht möglich, da das mittlere Blasformwerkzeugsegment auch den Schulterbereich umfasst. Nachteilig an den beschriebenen Verfahren ist, dass die Extrusion des Kunststoffschlauchs sowie das anschliessende Aufblasen des Hohlkörpers von der gleichen Seite des Blasformwerkzeugs erfolgt. Dies hat den Nachteil, dass die Produktionsgeschwindigkeit limitiert ist, weil das Werkzeug hin- und herbewegt werden muss.

Aufgabe der vorliegenden Erfindung ist es, ein Blasformwerkzeug bereitzustellen, mit welchem ein Hohlkörper, insbesondere Tube, herstellbar ist, welcher mindestens abschnittsweise nahtlos ist und die e.g. Nachteile beseitigt. Ein weiteres Ziel ist es, einen Hohlkörper, insbesondere Tube bereitzustellen, mit einer individualisierenden Gestalt bereitzustellen. Noch ein Ziel ist es, ein Herstellverfahren zur Herstellung eines Hohlkörpers vorzuschlagen, mit welchem ein Tubenkörper möglichst ohne sichtbare Längstrennnähte kostengünstig hergestellt werden können. Ein weiteres Ziel ist es, eine Tube bereitzustellen, dessen Tubenkörper grösstenteils nahtlos ist. Noch ein Ziel ist es, eine Tube vorzuschlagen, dessen Tubenkörper möglichst individuell gestaltbar ist.

Die Lösung dieser Aufgaben besteht in einem Blasformwerkzeug, sowie in einem Herstellverfahren und einer Extrusionsblasmaschine für Hohlkörper, insbesondere für Tuben, mit den im kennzeichnenden Abschnitt der jeweiligen unabhängigen Ansprüche angeführten Merkmalen bzw. Verfahrensschritten. Bevorzugte Ausführungsvarianten und/oder Weiterbildungen der Erfindung sind Gegenstand der abhängigen Patentansprüche der jeweiligen Anspruchskategorie.

Erfindungsgemäss wird die Aufgabe durch ein Blasformwerkzeug gemäss Oberbegriff von Anspruch 1 dadurch gelöst dass das zweite Werkzeugsegment zur Herstellung des Hals- und Schulterbereichs ausgelegt ist. Das erfindungsgemässe Blasformwerkzeug hat den Vorteil, dass sich Hohlkörper, insbesondere Tuben, herstellen lassen, deren Oberteil unterschiedlich gestaltet werden kann. Ein weiterer Vorteil ist, dass der restliche Teil des Hohlkörpers einen nahtlosen zylindrischen Abschnitt aufweist, der sich gut bedrucken oder dekorieren lässt Eine Hauptanwendung des erfindungsgemässen Blasformwerkzeugs liegt in der Herstellung von Tuben. Diese wurden bisher in viel aufwändigeren, zum Teil mehrstufigen Verfahren hergestellt, um die unerwünschten Trennnähte zu vermeiden. Die erfindungsgemäss hergestellten Tuben können individuell gestaltet werden, da die axialen Dimensionen der verschiedenen Werkzeugsegmente sich beliebig wählen lassen.

Vorteilhaft definiert die zweite Kavität eine Schulter mit einem Auslass. Die Schulter mit dem Auslass schliesst sich direkt an den nahtlosen Hohlkörperabschnitt an. Dabei kann das zweite Werkzeugsegment gleichzeitig auch zur Bildung eines oberen Teils des Tubenkörpers ausgebildet sein. Dies ermöglicht es, einen oberen, d.h. an die Schulter angrenzenden Tubenkörperabschnitt, anders zu gestalten als der Rest des Tubenkörpers, welcher nahtlos ist. Der Auslass kann als eine Auspressöffnung mit einem Aussen- oder Innengewinde ausgebildet sein. Denkbar ist jedoch auch, dass die Auspressöffnung mit einem Einwegverschluss versehen ist, der während des Aufblasvorgangs innerhalb der Blasform erstellt wird. Grundsätzlich kann die zweite Kavität auch für die Herstellung eines Teils des zylindrischen Hohlkörpers eingesetzt werden.

Vorteilhaft besitzt das erste oder zweite Werkzeugsegment eine Mündung, in welche ein Blasdom einfahrbar ist. Je nach herzustellendem Hohlkörper kann der Blasdorn also entweder durch das Kopf- oder das Bodenteil eingeführt werden. Der Blasdom wird beispielsweise dann durch das Bodenteil in die Kavität eingeführt, wenn das Kopfteil des Hohlkörpers bereits fertig geblasen werden soll. Mit dem Blasdom und Druckbeaufschlagung kann der von den Werkzeugsegmenten umfasste, extrudierte Schlauch oder Vorformling in die durch die Kavitäten bestimmte Form umgeformt werden. Die Mündung hat vorzugsweise bereits die Form des herzustellenden Auslasses.

Die zweigeteilten Blasformwerkzeugsegmente besitzen vorzugsweise je eine erste und eine zweite Werkzeughälfte. Diese Werkzeughälften sind in bekannter Weise mittels Zentrierzapfen und Zentrierbuchsen relativ zueinander geführt. Ausserdem können zwischen den einzelnen Werkzeugsegmenten Führungsmittel vorgesehen sein. Ziel ist es, dass die Spalte zwischen den einzelnen Werkzeugsegmenten möglichst gering sind, damit die Trennebenen beim ausgeformten Hohlkörper möglichst unsichtbar sind.

Gemäss einer vorteilhaften Ausführungsform der Erfindung können weitere einstückige und zweigeteilte Werkzeugsegmente vorgesehen sein. Durch das Vorsehen von weiteren Werkzeugsegmenten lassen sich beispielsweise Hohlkörper mit einer Aufhängeöse oder einem Griff am zylindrischen Hohlkörperabschnitt herstellen. Dabei wird der Abschnitt mit dem Griff mit einem zweigeteilten Werkzeugsegment hergestellt, welches beispielsweise zwischen zwei einstückigen Werkzeugsegmenten oder zwischen dem ersten und zweiten oder ersten und dritten Werkzeugsegment angeordnet ist. Es versteht sich, dass drei oder mehrere einstückige Werkezeugsegmente vorgesehen sein können. Diese können jeweils von zweigeteilten Werkzeugsegmenten begrenzt sein.

Eine andere vorteilhafte Ausführungsform sieht vor, dass die erste Kavität des ersten Werkzeugsegments an der Innenwand Vertiefungen oder Erhebungen ausgebildet hat. Damit lassen sich Hohlkörper herstellen, welche reliefartige Strukturen aufweisen. Dies eröffnet den Designer von Hohlkörpern und insbesondere von Tuben neue Gestaltungsmöglichkeiten. Derartige Hohlkörper mit reliefartigen Strukturen sind gegenüber den bekannten Hohlkörpern mit glatten Mantelflächen besser unterscheidbar.

Um beispielsweise eine Tube mit einem angrenzend zur Schulter abgesetzten Randbereich herzustellen, kann die erste Kavität im Randbereich der ersten Öffnung eine umlaufende Vertiefung aufweisen. Die Vertiefung ist vorzugsweise auf jener Seite des Blasformwerkzeugs vorgesehen, in deren Richtung der Hohlkörper nach dem Erstarren ausgestossen wird.

Mit dem erfindungsgemässen Blasformwerkzeug können beliebige nahtlose, zylindrische Körper hergestellt werden. Dabei kann der axiale Durchgang des ersten Werkzeugsegments im Querschnitt kreisrund, oval oder polygonal (rechteck-, sechseckförmig etc.) mit abgerundeten Ecken sein.

Zweckmässigerweise sind die Werkzeughälften der zweigeteilten Werkzeugsegmente jeweils auf einander gegenüberliegenden Formaufspannplatten montiert. Auf den Formaufspannplatten können die Segmente für die Herstellung des Kopf- und des Bodenteils in Abstand voneinander angeordnet sein. Vorteilhaft sind die Formaufspannplatten mittels eines Hebelsystems miteinander verbunden. Dies hat den Vorteil, dass die Werkzeughälften gleichmässig mit Druck beaufschlagt werden können.

Gegenstand der vorliegenden Erfindung ist auch ein Verfahren gemäss Oberbegriff von Anspruch 14, welches dadurch gekennzeichnet ist,
- dass ein mehrteiliges Blasformwerkzeug mit mehreren hintereinander angeordneten Werkzeugsegmenten bereitgestellt wird, von welchen Werkzeugsegmenten wenigstens ein erstes Werkzeugsegment einstückig und ein zweites und drittes Werkzeugsegment zweigeteilt sind,
- dass das erste Werkzeugsegment einen axialen Durchgang besitzt mit einer ersten und einer zweiten Öffnung, welcher Durchgang eine erste Kavität zur Bildung eines nahtlosen Hohlkörperabschnitts definiert,
- dass das zweite zweigeteilte Werkzeugsegment in der Blasposition eine zweite Kavität definiert, die an die erste Öffnung des Durchgangs anschliesst und der Bildung eines Kopfteils des Hohlkörpers dient,
- dass das dritte zweigeteilte Werkzeugsegment in der Blasposition eine dritte Kavität definiert, die an die zweite Öffnung des Durchgangs anschliesst und der Bildung eines Bodens des Hohlkörpers dient,
- dass der extrudierte Kunststoffschlauch in den axialen Durchgang des ersten Werkzeugsegments eingebracht wird und die oben und unten aus der ersten Kavität ragenden Abschnitte des extrudierten Kunststoffschlauchs von den beidseits an das erste Werkzeugsegment angrenzenden zweiten und dritten zweigeteilten Werkzeugsegmenten umfasst werden, und
- dass der Kunststoffschlauch zu einem Hohlkörper gemäss der durch die Kavitäten der einzelnen Werkzeugsegmente bestimmten Form aufgeblasen wird.

Die Vorteile des erfindungsgemässen Herstellverfahrens wurden bereits oben bei der Diskussion des neuartigen Blasformwerkzeugs diskutiert.

Vorteilhaft werden die zweigeteilten Werkzeugsegmente synchron geschlossen und geöffnet. Dies lässt sich konstruktionstechnisch einfach und kostengünstig realisieren. Gemäss einer Ausführungsvariante wird der extrudierte Schlauch senkrecht in das Blasformwerkzeug eingebracht und nach dem Schliessen der zweigeteilten Werkzeugsegmente ein Blasdorn von unten in die Mündung des Blasformwerkzeugs eingefahren. Dies lässt sich am einfachsten bewerkstelligen, wenn der Extruderkopf, das Blasformwerkzeug und der Blasdom axial ausgerichtet sind. Für die Erzeugung der axialen Bewegungskomponenten kann eine relativ einfache Steuerung sorgen.

Beim erfindungsgemässen Verfahren kann ein ein- oder mehrschichtig extrudierter Kunststoffschlauch eingesetzt werden. Das heisst, es lassen sich auch mehrschichtige Kunststoffhohlkörper herstellen, welche Barriereschichten aufweisen. Zweckmässigerweise wird der Boden des erstarrten Hohlkörpers im Bereich der Nahtstelle zwischen dem dritten und dem angrenzenden Werkzeugsegment abgeschnitten. Es kann damit ein Halbzeug hergestellt werden, dessen eine Längsende offen ist. Durch das offene Längsende kann die vorgesehene Menge einer pastösen, flüssigen, pulverförmigen oder rieselfähigen Masse in den Körper des Halbzeugs abgefüllt werden. Danach wird das offene Ende des Körpers verschlossen. Dies erfolgt üblicherweise durch Zusammenpressen und Verschweissen des Randes des offenen Längsendes des Körpers. Es kann aber auch vorgesehen sein, dass das offene Ende des Körpers nach dem Abfüllen durch Versiegeln oder durch Kleben verschlossen wird.

Ein weiterer Gegenstand der vorliegenden Erfindung ist ein Hohlkörper erhältlich durch das erfindungsgemässe Herstellverfahren. Der Hohlkörper ist im Vergleich zu bekannten Hohlkörpern dadurch gekennzeichnet, dass dieser in einem Verfahrensschritt hergestellt ist, einen nahtlosen zylindrischen Körperabschnitt aufweist und das Kopfteil mit einem zweigeteilten Werkzeugsegment hergestellt ist.

Ein weiterer Gegenstand der vorliegenden Erfindung ist ein Hohlkörper gemäss Oberbegriff von Anspruch 21, welcher dadurch gekennzeichnet ist, dass die Schulter und der Hals des Hohlkörpers durch ein mehrteiliges Werkzeug hergestellt sind. Der erfindungsgemässe Hohlkörper hat den Vorteil, dass der eigentliche Körper, welcher das Aufnahmevolumen definiert, unterschiedlich gestaltet und zwei unterschiedliche Geometrien aufweisen kann. So kann der nahtlose Hohlkörperabschnitt eine erste Geometrie und der zweite Tubenkörperabschnitt eine zweite von der ersten Geometrie unterschiedliche Geometrie besitzen. Im Falle einer noch nicht befüllten Tube kann der nahtlose Abschnitt des Tubenkörpers z.B. rund oder oval und der zweite Abschnitt des Tubenkörpers vier-, fünfsechs-, oder achteckig, resp. polygonal sein. Durch den Einsatz der mehrteiligen Werkzeugsegmente für die Herstellung des Hals-/Schulterbereichs einerseits und des Bodenbereichs andererseits kann der hergestellte Artikel jegliches Design aufweisen, welches nicht auf die gezeigten Ausführungsbeispiele beschränkt ist. Auch kann der zweite Hohlkörperabschnitt anstelle oder zusätzlich zu einer unterschiedlichen Geometrie mit einer Profilierung oder reliefartigen Struktur versehen sein oder einen anderen Durchmesser aufweisen als der erste Hohlkörperabschnitt. Ebenso kann der zweite Hohlkörperabschnitt unterschiedlich lang ausgebildet sein. Im Extremfall kann der zweite Hohlkörperabschnitt gegen null gehen, sodass der erste Hohlkörperabschnitt direkt an die Schulter anschliesst, wobei die Schulter anders als rund gestaltet sein kann, um der Tube ein spezielle Erscheinung zu verleihen. Gemäss einer Ausführungsform hat der erste nahtlose Hohlkörperabschnitt einen anderen Durchmesser als der zweite Hohlkörperabschnitt, d.h. er kann grösser oder kleiner als der zweite Hohlkörperabschnitt sein. Denkbar ist auch, dass zusätzlich der Bodenbereich des Hohlkörpers mittels eines zweigeteilten Werkzeugsegments hergestellt wird. Dies ergibt weitere Gestaltungsmöglichkeiten.

Gemäss einer bevorzugten Ausführungsvariante ist der Hohlkörper eine Tube ist, welche durch Extrusionsblasformen hergestellt ist. Im Extrusionsblasverfahren kann die Tube in einem einstufigen Prozess direkt hergestellt werden, indem der extrudierte Schlauch in einem Blasformwerkzeug gemäss einem der Ansprüche 1 bis 13 aufgeblasen wird.

Gegenstand der vorliegenden Erfindung ist auch eine Extrusionsblasmaschine zur Herstellung von Hohlkörpern, insbesondere von Tuben, mit einem Extruderkopf mit einer Extrusionsdüse, wenigstens einem Blasdom, einem Blasformwerkzeug gemäss einem der Ansprüche 1 bis 13 und Antriebsmitteln, um die zweigeteilten Werkzeugsegmente von einer Offen-Endposition in eine Geschlossen-End- oder Blasposition zu bewegen und vice versa, weiter gekennzeichnet dadurch, dass das Blasformwerkzeug unterhalb der Extrusionsdüse angeordnet ist derart, dass die Extrusionsdüse und der Durchgang des einstückigen Werkzeugsegments auf einer Achse relativ zueinander ausgerichtet sind. Vorteilhaft erfolgt die Ausrichtung der Extrusionsdüse und des Durchgangs des einstückigen Werkzeugsegments in der Senkrechten. In Abhängigkeit des herzustellenden Hohlköpers kann das Kopfteil desselben im oberen oder im unteren Teil des Blasformwerkzeugs ausgeformt werden. Auch kann die Mündung zur Einführung des Blasdorns je nach Gestalt des herzustellenden Hohlkörpers im oberen oder im unteren Teil des Blasformwerkzeugs vorgesehen sein.

Vorteilhaft ist der Blasdom als Blas- und Kalibrierdorn ausgebildet. Dies hat den Vorteil, dass Hohlkörper mit einem Auslass mit einer definierten Wandstärke und einem definierten Innendurchmessers hergestellt werden können. Gemäss einer besonders vorteilhaften Ausführungsvariante ist die Extrusionsblasmaschine als Mehrfachextrusionsblasmaschine ausgebildet mit einer Mehrzahl von Extrusionsdüsen und einem Mehrfachblasformwerkzeug sowie einer auf die Anzahl der Blasformkavitäten abgestimmten Zahl von Blasdornen. Eine solche Maschine hat den Vorteil, dass der Ausstoss an Hohlkörpern sehr hoch sein kann.

Vorzugsweise sind der Extruderkopf und der Blasdom axial beweglich und das Blasformwerkzeug stationär angeordnet. Dies hat den Vorteil, dass am Blasformwerkzeug lediglich Mittel vorgesehen sein müssen, die für das Öffnen und Schliessen der zweigeteilten Werkzeugsegmente sorgen. Für das Absenken und Anheben des Extruderkopfes und des Blasdoms sind zweckmässigerweise erste und zweite Hubmittel vorgesehen. Dies ist konstruktionstechnisch mit einfachen Mitteln zu realisieren.

Im Folgenden wird die Erfindung unter Bezugnahme auf die nicht massstabsgetreuen, schematischen Darstellungen näher erläutert. Es zeigen:
- Figur 1: Eine Ausführungsform eines erfindungsgemässen Blasformwerkzeugs mit einem einstückigen ersten Werkzeugsegment und zweiten und dritten zweigeteilten Werkzeugsegmenten in perspektivischer Ansicht;
- Figur 2a: Das Blasformwerkzeugs von Figur 1 im Längsschnitt und in geschlossenem Zustand;
- Figur 2b: Das Blasformwerkzeugs von Figur 1 im Längsschnitt und in geöffnetem Zustand;
- Figuren 3 bis 6: Die verschiedenen Verfahrensschritte bei der Herstellung eines Hohlkörpers;
- Figuren 7: Beispiele von nach dem erfindungsgemässen Verfahren hergestellten
- bis 15: Tuben mit nahtlosem Tubenkörper.

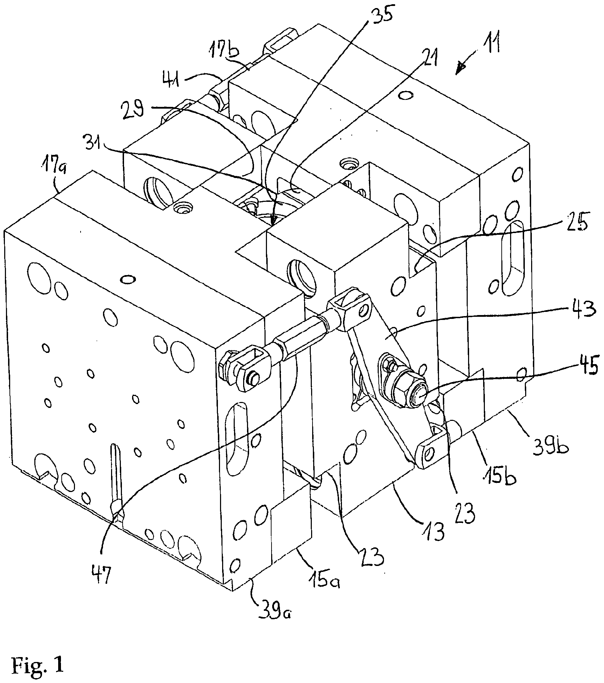

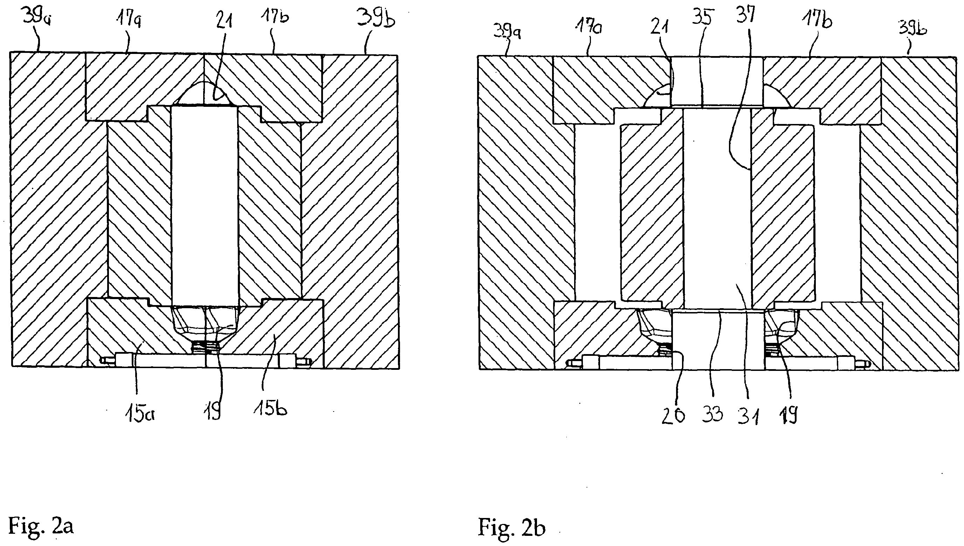

Die Figuren 1 und 2 zeigen ein Ausführungsbeispiel eines erfindungsgemässen Blasformwerkzeugs 11, welches aus einem zentralen, einstückigen ersten Werkzeugsegment 13, einem zweiten, zweigeteilten Werkzeugsegment 15 mit den Werkzeughälften 15a,15b, und einem dritten, zweigeteilten Werkzeugsegment 17 mit den Werkzeughälften 17a,17b besteht. Die Werkzeughälften15a,15b und 17a, 17b haben in der Draufsicht die Gestalt je eines T. Dabei ist im senkrechten Schenkel des T jeweils eine Hälfte einer Kavität 19, 21 ausgebildet.

Das einstückige erste Werkzeugsegment 13 hat einen quaderförmigen Metallkörper, bei welchem an gegenüberliegenden Seiten jeweils einander gegenüberliegende Schultern 23, 25 ausgebildet sind. In der Mitte des Metallkörpers sind die Schultern 23,25 jeweils durch eine Aussparung 27,29 miteinander verbunden. Die Breite der Aussparungen 27,29 entspricht dabei der Breite des senkrechten Schenkels der Werkzeughälften15a,15b und 17a, 17b.

Das erste Werkzeugsegment 13 besitzt einen zentralen zylindrischen Durchgang 31 mit einer ersten Öffnung 33, welche in der Aussparung 27 mündet, und einer zweiten Öffnung 35, welche in der Aussparung 29 mündet. Der zylindrische Durchgang 31 definiert dabei eine erste Kavität 37, welche der Herstellung eines nahtlosen zylindrischen Abschnitts 69 eines blasgeformten Hohlkörpers dient.

Das zweigeteilte Werkzeugsegment 15 definiert eine zweite Kavität 19, welche der Herstellung des einen Endstücks, vorliegend des Kopfteils, eines blasgeformten Hohlkörpers dient. Im zweigeteilten Werkzeugsegment 15 ist eine Mündung 20 vorgesehen, welche bereits die Form des Auslasses des herzustellenden Hohlkörpers hat. Die Mündung 20 dient auch der Aufnahme des Blasdoms.

Das zweigeteilte Werkzeugsegment 17 definiert eine dritte Kavität 21, welche der Herstellung des anderen Endstücks, vorliegend des Bodens, eines blasgeformten Hohlkörpers darstellt. In der Geschlossen-Endstellung der zweigeteilten Werkzeugsegmente 15,17 korrespondieren die Kavitäten 19, 37 und 21 miteinander und definieren zusammen die Gestalt des ganzen Hohlkörpers.

In gezeigten Ausführungsbeispiel sind die Werkzeughälften 15a,15b und 17a, 17b auf Formaufspannplatten 39a, 39b montiert. Die Formaufspannplatten 39a, 39b sind mittels eines Hebelsystems 41 in der Gestalt eines doppelten Kniehebels miteinander mechanisch gekoppelt. Das Hebelsystem 41 besteht jeweils aus einem Hebel 43, welcher auf einem an der Seitenfläche des ersten Werkzeugsegments vorgesehenen Achsbolzens 45 drehbar festgemacht ist. Die Hebel 43 sind über längenverstellbare und verschwenkbare Verbindungsstücke 47 mit den Formaufspannplatten 39a, 39b gelenkig verbunden. Die mechanische Kopplung der Formaufspannplatten 39a, 39b wirkt einem Verkanten der Werkzeughälften beim Schliessvorgang entgegen. Ausserdem erlauben die längenverstellbaren Verbindungsstücke 47, den Anpressdruck einzustellen. Das Blasformwerkzeug 11 ist im Betrieb einer Blasvorrichtung in einer üblichen, dem Fachmann bekannten Schliesseinheit angeordnet. Dabei bleibt das erste Werkzeugsegment während der Produktion über einen Ausgleich Mittig zur Schließeinheit positioniert - löst sich jedoch vom Grundrahmen des Gesamtwerkzeuges ab. Nur das Bodenteil und das Hals - Schulterteil bleiben fix mit dem Grundrahmen und der Schließplatte der Blasmaschine verbunden.

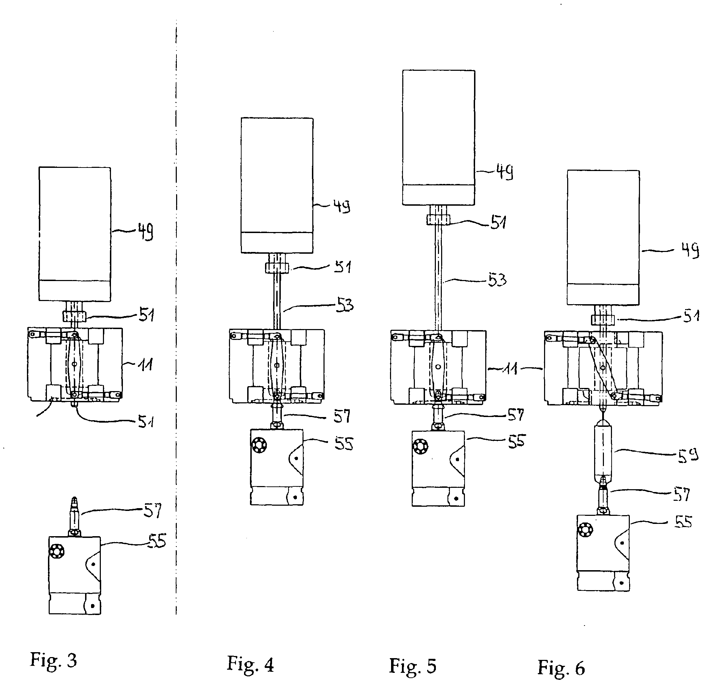

Die Darstellungen in den Figuren 3 bis 6 dienen zur Erläuterung des Verfahrens zur Produktion eines Kunststoffhohlkörpers in einer axial ausgerichteten Anordnung. Die Figuren zeigen einen Extruderkopf 49 mit einer Extrusionsdüse 51, aus welcher ein Schlauch 53 austritt. Der Extruderkopf 49 ist oberhalb eines erfindungsgemässen Blasformwerkzeugs 11 angeordnet derart, dass die Extrusionsdüse 51 mit dem Durchgang 31 axial fluchtet. Unter dem Blasformwerkzeug 11 ist eine Blasdornhalterung 55 mit einem Blasdorn 57 angeordnet. Der Blasdorn 57 ist zum Durchgang 31 axial fluchtend ausgerichtet. In den Figuren nicht näher gezeigte Hubmittel erlauben es, den Extruderkopf 49 und die Blasdornhalterung 55 unabhängig voneinander anzuheben oder abzusenken. Das beispielhaft gezeigte Blasformwerkzeug 11 besteht aus drei übereinander angeordneten Werkzeugsegmenten 13, 15, 17. Dabei wird durch das oben angeordnete, zweigeteilte Werkzeugsegment 17 der Boden, durch das mittlere einstückige Werkzeugsegment 13 der nahtlose Hohlkörperabschnitt und durch das untere Werkzeugsegment 15 das Kopfteil des Hohlkörpers erzeugt. Eine solche Anordnung hat den Vorteil, dass der Schlauch von oben zugeführt und der hergestellte Hohlkörper unten entnommen werden kann. Dabei kann das Kopfteil grösser als der übrige Tubenkörper sein.

Fig. 3 zeigt den Herstellungszyklus beginnend mit dem Zustand, in dem das Blasformwerkzeug 11 geschlossen ist. Das untere Endstück des aus der Extrusionsdüse 51 des Extruderkopfes 4 extrudierten Schlauchs 53 ist vom geschlossenen Blasformwerkzeug 11 umfasst. Ein kleines Stück des Schlauchs 53 ragt noch aus dem Blasformwerkzeug 11 heraus (Fig. 3).

Weil der Schlauch 53 im Betrieb der Extrusionsblasvorrichtung kontinuierlich extrudiert wird, fährt der Extruderkopf 49 gleichmässig nach oben, und der Abstand zum Blasformwerkzeug wird kontinuierlich vergrössert (vgl. Fig. 4 und 5). Wird der Extruderkopf mit einer Geschwindigkeit angehoben, die grösser ist als die Extrusionsgeschwindigkeit des Kunststoffschlauchs, wird der Schlauch aus der Extrusionsdüse herausgezogen und gedehnt, und seine Wandstärke verringert sich. Während des Anhebens des Extruderkopfes 49 kann bei Bedarf ein Wanddickenregelungsprogramm gefahren werden, bei dem durch Variation der Spaltweite der Extrusionsdüse die Wanddicke des Schlauchs im gewünschten Umfang verändert werden kann. Während des Anhebens des Extruderkopfes 49 kann auch ein Stützluftprogramm gefahren werden.

Währenddem der Extruderkopf 49 nach oben fährt, wird auch die Blasdornhalterung 55 mit dem freien Blasdorn 57 angehoben. Der Blasdom 57 wird in das aus der Mündung 20 des Blasformwerkzeugs herausragenden Schlauchende soweit eingeführt, bis er dichtend an der Mündung anliegt. Bereits während des Einfahrens des Blasdorns 57 in das zweite Werkzeugsegment 17a, 17b kann mit dem Vorblasen begonnen werden. Mit einem als Kalibrierdorn ausgebildeten Blasdom kann die spätere Öffnung des aufzublasenden Hohlkörpers gleichzeitig kalibriert werden.

In Fig. 4 ist der freie Blasdom 11 bereits vollständig in das Blasformwerkzeug 11 eingefahren. In dieser Position wird der Schlauch 53 zu einem den Kavitäten entsprechenden Hohlkörper 61 aufgeblasen (Fig. 4 und 5). Während des Blasvorgangs wird der Extruderkopf 49 immer noch angehoben.

Sobald der Blasvorgang abgeschlossen und der Hohlkörper erstarrt ist, wird das Blasformwerkzeug 11 geöffnet, indem die zweigeteilten Werkzeugabschnitte 15a, 15b und 17a, 17b auseinander gefahren werden. Zu diesem Zeitpunkt hat der zwischenzeitlich extrudierte Schlauch 53 eine Länge erreicht, die ungefähr der axialen Länge des Blasformwerkzeugs 11 entspricht. Nach dem Öffnen des Blasformwerkzeugs 11 wird die Bewegungsrichtung des Extruderkopfes umgekehrt, und es werden der Exruderkopf 49 und die Blasdornhalterung 55 synchron und gleichmässig nach unten gefahren. Dabei ist der aufgeblasene Hohlkörper 61 durch den Schlauch 53 und den Blasdorn57 gehalten (Fig. 6).

Sobald der oben abgequetschte Bereich des Schlauchs sich ausserhalb des Blasformwerkzeugs 11 befindet (Fig. 6), wird das Blasformwerkzeug 11 geschlossen und der Schlauch 53 oberhalb des abgequetschten Bereichs durch ein in den Figuren nicht dargestelltes Messer abgeschert. Der Hohlkörper 61 wird dann von einem Roboter vom Blasdom 57 genommen und auf ein Transport oder ähnliches abgelegt (in den Figuren nicht gezeigt). Jetzt ist der Zustand, wie in Fig. 3 dargestellt, wieder erreicht, und der Produktionszyklus kann wieder von vorne starten.

Der blasgeformte Hohlkörper 61 kann dann weiteren Nachbearbeitungsschritten zugeführt werden. Dabei kann im Falle der Herstellung einer Tube der Boden des Hohlkörpers im Bereich der Trennnaht zwischen dem ersten und zweiten Werkzeugsegment 13,15 abgetrennt werden, sodass ein Füllen der Tube durch die entstandene Öffnung mit der gewünschten Menge einer pastösen, flüssigen, pulverförmigen, rieselfähigen Zusammensetzung ermöglicht ist. Der Randbereich der Öffnung wird nach dem Befüllen zusammengedrückt, sodass zwei Lagen des Mantels übereinander zu liegen kommen, welche durch Verschweissen (auch Ultraschall- oder Hochfrequenzschweissen), Kleben oder einer anderen beliebigen Verbindungstechnik miteinander dicht verbunden werden.

Aus Fig. 6 ist deutlich ersichtlich, dass der extrudierte Schlauch 53 auch bei geöffneter Blasformwerkzeug 11 in einer axial definiert ausgerichteten Lage gehalten ist. Dadurch, dass der Schlauch immer noch mit den fertig geblasenen Hohlkörper 61 verbunden ist, ist der Schlauch einerseits von der Extrusionsdüse 51 und andererseits über den Blasdorn 57 fixiert. Dadurch wird ein Pendeln des Schlauchs 53 zuverlässig verhindert. Die Absenkgeschwindigkeit des Extrusionskopfes 49 und des freien Blasdoms 57 erfolgt mit Vorteil synchron und entspricht wenigstens der Extrusionsgeschwindigkeit des Schlauchs. Durch einen vorgebbaren Unterschied der Absenkgeschwindigkeiten kann der kontinuierlich extrudierte Schlauch 53 im gewünschten Umfang gedehnt werden. Die axiale ausgerichtete Anordnung des Extruderkopfes 49, des Blasformwerkzeugs 11 und des freien Blasdoms 57 erlaubt auch eine relativ einfache Steuerung der axialen Bewegungskomponenten. Mit Vorteil sind dabei die Austrittsgeschwindigkeit des Kunststoffschlauchs 53, die Bewegung des freien Blasdorns 57 und eine Verstellbewegung der Weite der Extrusionsdüse 51 individuell und aufeinander abgestimmt einstellbar. Dies erlaubt die Umsetzung optimierter Bewegungsabläufe, die auf die Erfordernisse der zu blasenden Hohlkörper abgestimmt sind, ohne dadurch am Gesamtkonzept des axial ausgerichteten Verfahrens Änderungen vornehmen zu müssen.

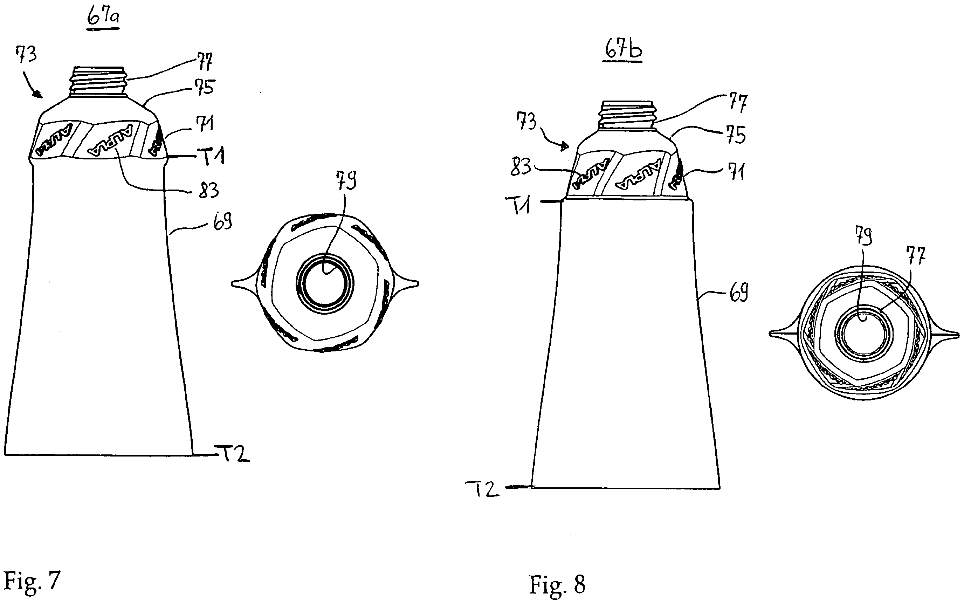

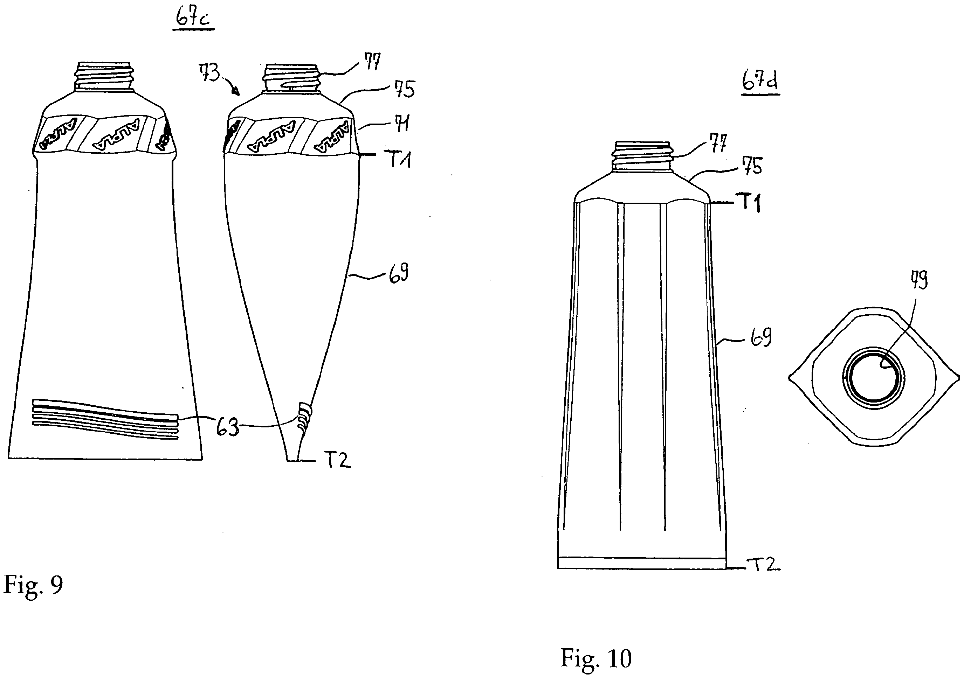

Die Figuren 7 bis 15 zeigen eine Reihe von Tuben, nachfolgend generell mit der Referenznummer 67 bezeichnet, mit einem Tubenkörper, welcher einen nahtlosen ersten Tubenkörperabschnitt 69 (zwischen den Trennebenen T1 und T2) und ein Kopfteil 73 mit einer von den Formhälften herrührenden Trennnaht besitzen. Das Kopfteil 73 umfasst dabei einen zweiten Tubenkörperabschnitt 71, welcher an den ersten Tubenkörperabschnitt 69 anschliesst und bis zu einer Schulter 75 reicht. An die Schulter 75 schliesst ein Hals 77 mit einer Auslassöffnung 79 an. Diese Tuben 67 können mit einem erfindungsgemässen Blasformwerkzeug bestehend aus mindestens 3 übereinander angeordneten Werkzeugsegmenten hergestellt werden und eine von herkömmlichen Tuben unterschiedliche Gestalt haben. Dies eröffnet die Möglichkeit, den Tuben eine individualisierende Gestalt zu geben, was im Marketing von grosser Bedeutung ist. In den Figuren ist mit T1 die Trennebene zwischen dem ersten und zweiten Werkzeugsegment 13,15 und mit T2 die Trennebene zwischen dem ersten und dritten Werkzeugsegment 13,17 bezeichnet. Dadurch, dass das Kopfteil mittels eines zweigeteilten Werkzeugsegments hergestellt wird, kann dieses im Durchmesser grösser oder kleiner als der übrige Tubenkörper sein (Figuren 7 und 8). Auch ist das Entformen des fertigen Hohlkörpers trotz des vorhandenen einstückigen Werkzeugsegments problemlos möglich, weil der Tubenkörper sich beim Abkühlen zusammenzieht. Überraschenderweise ist der Schwund des Hohlkörpers im Allgemeinen so gross, dass eine Entformung selbst dann noch problemlos möglich ist, wenn im einstückigen Werkzeugsegment noch Vertiefungen, wie Rillen, vorhanden sind, sodass in der fertigen Tube reliefartige Erhöhungen ausgebildet sind (Figur 9). Die Vertiefungen können ungefähr 0.1 bis 3% des Materialschwundes bezogen auf den Durchmesser des Hohlkörpers betragen.

Bevorzugte Kunststoffe für die Herstellung der Tuben sind: LDPE, PET, HDPE,LLDPE, TPE, TPU, PP, EVH, PA, sowie Abmischungen von zwei oder mehreren der vorgenannten Kunststoffe.

Figur 7 zeigt eine Tube 67a mit einem Kopfteil 73, welches im Durchmesser etwas grösser als der übrige Tubenkörper ist. Das Kopfteil 73 umfasst den zweiten Tubenkörperabschnitt 71, die Schulter 75 und den Hals 77 mit Auslassöffnung 79. Am Hals 77 kann ein Schraubengewinde für einen nicht dargestellten Deckel ausgebildet sein. Die Tube 67a ist mit einer Beschriftung 83 versehen, welche grundsätzlich als Vertiefung oder als Erhöhung ausgeführt sein kann. Wie aus der Draufsicht erkennbar ist, hat der zweite Tubenkörperabschnitt 71 aussen eine hexagonale Gestalt.

Die Tube 67b gemäss Figur 8 unterscheidet sich von derjenigen von Figur 7 dadurch, dass das Kopfteil 73 mit hexagonalem zweiten Tubenkörperabschnitt 71 im Durchmesser kleiner als der erste Tubenkörperabschnitt 69 ist. Bei der Tube 67c gemäss Figur 9 ist im Tubenkörper eine Mehrzahl von parallelen reliefartigen Streifen 63 im unteren Bereich des Tubenkörpers erkennbar. Solche reliefartigen Strukturen ermöglichen es, den Tuben ein spezielles Design zu verleihen, welches im Geschäftsverkehr als ein Herkunftshinweis dienen kann.

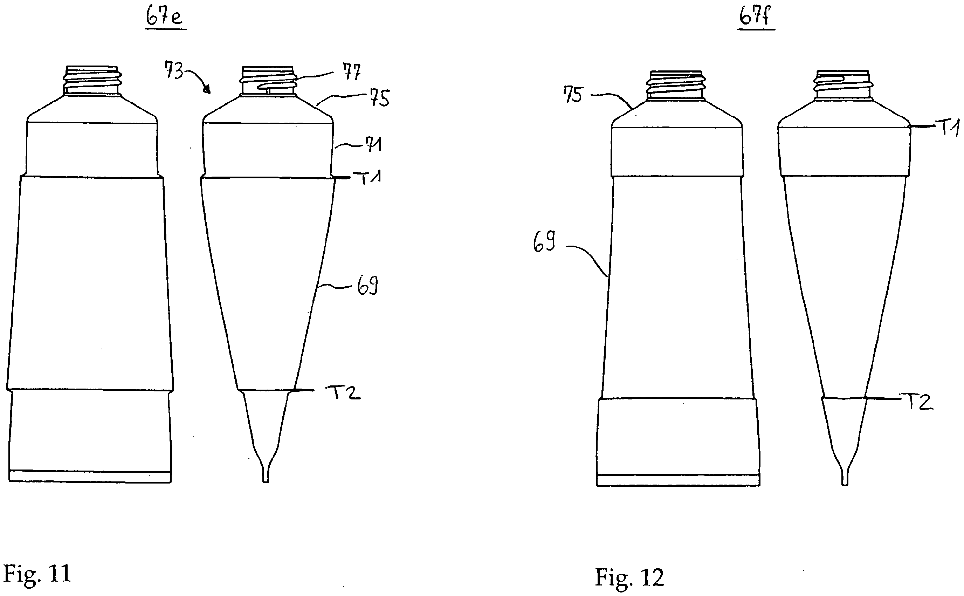

Figur 10 zeigt eine Tube 67d mit einem Kopfteil 73, welches einen zweiten Tubenkörperabschnitt 71 mit ungefähr quadratisch mit abgerundeten Eckenbesitzt. Die Ausführungsbeispiele gemäss den Figuren 11 und 12 zeigen zwei Möglichkeiten, wie sowohl im Hals-Schulterbereich als auch im Bodenbereich Tuben unterschiedlich gestaltet werden können (durch die Entformung ermöglicht). Bei der Tube 67e gemäss Figur 11 ist der Tubenkörper im mittleren Bereich im Durchmesser etwas grösser als die Kopf- und Bodenteile. Im Vergleich dazu ist bei der Tube 67f gemäss Fig. 12 der nahtlose erste Tubenkörperabschnitt 69 im Durchmesser etwas kleiner als die Kopf- und Bodenteile.

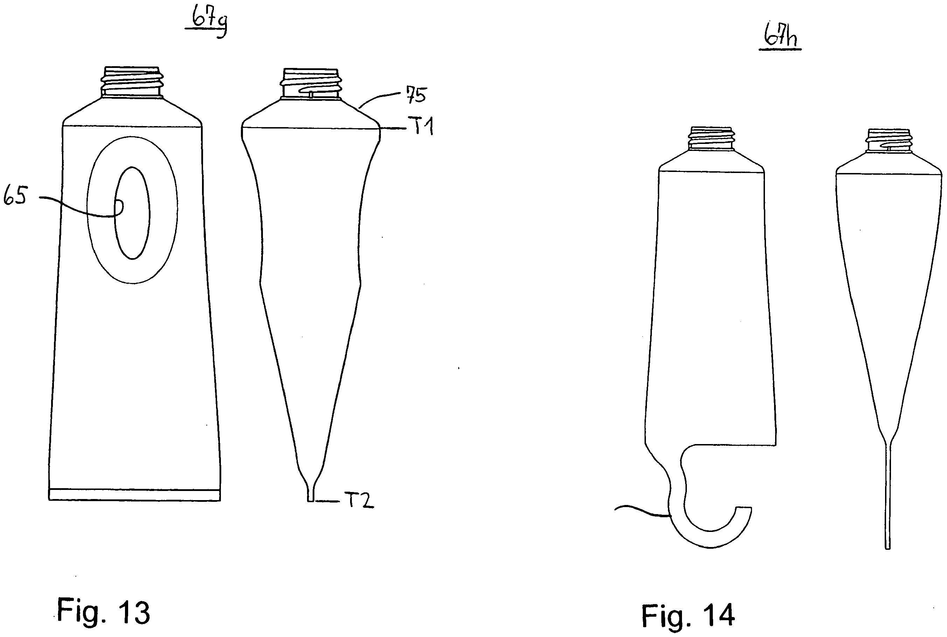

Die Tube 67g gemäss Figur 13 besitzt im nahtlosen Tubenkörperabschnitt 69 eine ovale Öffnung 65. Diese lässt sich herstellen, wenn im ersten Werkzeugsegment zusätzlich zwei einander gegenüberliegende bewegliche Schieber mit ovalem Querschnitt vorgesehen sind. Die Schieber werden in die erste Kavität eingeführt, sobald der extrudierte Schlauch im Blasformwerkzeug aufgenommen ist. Mit dem erfindungsgemässen Blasformwerkzeug lassen sich aber auch Tuben mit einem Aufhängehaken herstellen, wie dies die Figur 14 zeigt. In diesem Fall wird ein etwas längerer nahtloser Tubenkörperabschnitt hergestellt, dessen hinterer Teil nach dem Entformen des Hohlkörpers zusammengedrückt, verschweisst und ein Aufhängehaken ausgestanzt wird.

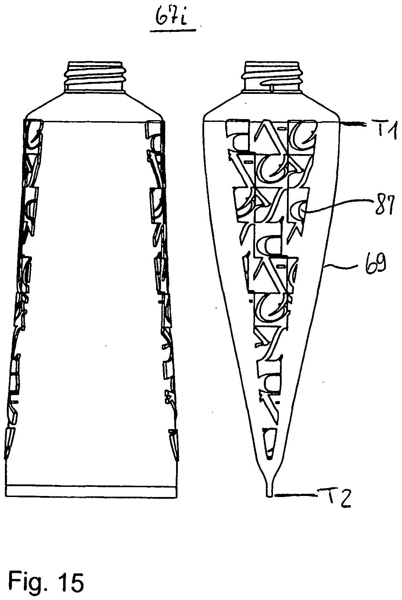

Die Tube 67i gemäss Fig. 15 besitzt an gegenüberliegenden Seiten des Tubenkörpers ornamentartige Strukturen 87, die sich über die gesamte Länge des Tubenkörpers erstrecken. Diese Strukturen lassen sich grundsätzlich als reliefartige Erhebungen oder Vertiefungen, ausführen.

Die Erfindung wurde in den schematischen Zeichnungen am Beispiel eines Extruderkopfes mit nur einer Extrusionsdüse und einer Blasformwerkzeuganordnung mit nur einem Formhohlraum dargestellt. Es versteht sich, dass die geschilderte Anordnung und das geschilderte Verfahren auch bei Extrusionsblasvorrichtungen mit Mehrfachdüsenwerkzeugen und Mehrfachblasformwerkzeugen anwendbar sind. Die Zahl der Blasdome wird dabei auf die Anzahl der Blasformkavitäten abgestimmt.

Die Erfindung ist am Beispiel eines kontinuierlichen Extrusionsblasverfahrens und einer entsprechend ausgebildeten Vorrichtung mit vertikaler Anordnung des Extruderkopfes, des Blasformwerkzeugs und der Blasdome erläutert worden. Das erfindungsgemässe Verfahren ist auch bei einem diskontinuierlichen Extrusionsblasverfahren anwendbar und dementsprechend ist auch eine diskontinuierliche Extrusionsblasmaschine herstellbar. Auch kann das erfindungsgemässe Blasformwerkzeug für das Aufblasen von zuvor hergestellten Preforms eingesetzt werden.

Ein mehrteiliges Blasformwerkzeug zur Herstellung eines blasgeformten Hohlkörpers besitzt ein erstes einstückiges Werkzeugsegment 13 mit einem axialen Durchgang 31 mit einer ersten und einer zweiten Öffnung 33,35. Der Durchgang 31 definiert eine erste Kavität 37 zur Bildung eines nahtlosen Hohlkörperabschnitts. An die erste Öffnung 33 des Durchgangs 31 schliesst ein zweites zweigeteiltes Werkzeugsegment 15 an, welches in der Blasposition eine zweite Kavität 19 definiert und der Bildung eines Kopfteils des Hohlkörpers dient. An die zweite Öffnung 35 des Durchgangs 31 schliesst ein drittes zweigeteiltes Werkzeugsegment 17 an, welches in der Blasposition eine dritte Kavität 21 definiert und der Bildung eines Bodens des Hohlkörpers dient. Die drei Kavitäten zusammen definieren die Gestalt des ganzen herzustellenden Hohlkörpers. Durch die Variabilität des beschriebenen Blasformwerkzeugs können der Hals-/Schulterbereich und/der der Bodenbereich einer Tube unterschiedlich zu einem nahtlosen mittleren Tubenkörperabschnitt ausgebildet sein.

### Legende:

- 11: Blasformwerkzeug
- 13: einstückiges erstes Werkzeugsegment
- 15: zweites, zweigeteiltes Werkzeugsegment
- 15a, 15b: Werkzeughälften des Werkzeugsegments 15
- 17: drittes, zweigeteiltes Werkzeugsegment
- 17a, 17b: Werkzeughälften des Werkzeugsegments 17
- 19: Zweite Kavität
- 20: Mündung für Blasdom
- 21: Dritte Kavität
- 23: Schulter unten
- 25: Schulter oben
- 27: Aussparung zw. Schultern 23
- 29: Aussparung zw. Schultern 25
- 31: zylindrischer Durchgang des ersten Werkzeugsegments
- 33: Erste Öffnung des Durchgangs 19
- 35: Zweite Öffnung des Durchgangs 19
- 37: Erste Kavität
- 39a,39b: Formaufspannplatten
- 41: Hebelsystem
- 43: zentraler Hebel des Hebelsystems 41
- 45: Achsbolzen
- 47: Verbindungsstücke zwischen Hebel 43 und Formaufspannplatten 39a, 39b
- 49: Extruderkopf
- 51,: Extrusionsdüse
- 53: Extrudierter Schlauch
- 55: Blasdornhalterung
- 57: Blasdom
- 59: Hohlkörper
- 61: Hohlkörper
- 63: reliefartige Struktur
- 65: ovale Öffnung
- 67a -i: verschiedene Ausführungsformen von Tuben
- 69: Erster Hohlkörperabschnitt
- 71: Zweiter Hohlkörperabschnitt
- 73: Kopfteil
- 75: Schulter
- 77: Hals
- 79: Auslaßöffnung
- 81: Schraubengewinde
- 83: Beschriftung
- 85: Aufhängehaken
- 87: ornamentartige Strukturen

## Patentansprüche

1. Mehrteiliges Blasformwerkzeug zur Herstellung eines blasgeformten Hohlkörpers, insbesondere einer Tube, aus einem von der Blasform aufgenommenen, plastisch extrudierten Kunststoffschlauch oder einem Preform mit
- einem ersten einstückigen Werkzeugsegment (13) mit einem axialen Durchgang (31) mit einer ersten und einer zweiten Öffnung (33,35), welcher Durchgang (31) eine erste Kavität (37) zur Bildung eines ersten nahtlosen Hohlkörperabschnitts definiert,
- einem zweiten zweigeteilten Werkzeugsegment (15), welches in der Blasposition eine zweite Kavität (19) definiert, die an die erste Öffnung (33) des Durchgangs (31) anschliesst und der Bildung eines Kopfteils des Hohlkörpers dient, und
- einem dritten zweigeteilten Werkzeugsegment (17), welches in der Blasposition eine dritte Kavität (21) definiert, die an die zweite Öffnung (35) des Durchgangs (31) anschliesst und der Bildung eines Bodenteils des Hohlkörpers dient,

2. Blasformwerkzeug nach Anspruch 1, **dadurch gekennzeichnet, dass** die zweite Kavität einen zweiten an den ersten Hohlkörperabschnitt anschliessenden zweiten Hohlkörperabschnitt und eine an den zweiten Hohlkörperabschnitt anschliessende Schulter mit einem Auslass definiert.

3. Blasformwerkzeug nach Anspruch 1 oder 2, **dadurch gekennzeichnet, dass** das erste oder zweite Werkzeugsegment (15) eine Mündung (20) besitzt, in welche ein Blasdorn (57) einfahrbar ist.

4. Blasformwerkzeug nach einem der Ansprüche 1 bis 3, **dadurch gekennzeichnet, dass** die zweigeteilten Werkzeugsegmente (15,17) je eine erste und eine zweite Werkzeughälfte (15a, 15b; 17a, 17b) umfasst.

5. Blasformwerkzeug nach einem der Ansprüche 1 bis 4, **dadurch gekennzeichnet, dass** die erste Kavität (37) des ersten Werkzeugsegments (13) an der Innenwand Vertiefungen oder Erhebungen ausgebildet hat und/oder die erste Kavität (37) im Randbereich der ersten Öffnung (33) eine oder mehrere Vertiefungen, z.B. in Gestalt von Rillen, aufweist zur Herstellung von Hohlkörpern mit Erhebungen.

6. Blasformwerkzeug nach einem der Ansprüche 1 bis 5, **dadurch gekennzeichnet, dass** der axiale Durchgang (31) des ersten Werkzeugsegments (13) im Querschnitt kreisrund, oval oder polygonal (z.B. drei, vier-, fünf-, sechseckig etc.) ist.

7. Verfahren zur Herstellung eines Hohlkörpers, insbesondere einer Tube, in einem Extrusionsblasverfahren, bei dem ein von einem Extruderkopf extrudierter Kunststoffschlauch (53) in eine Kavität einer Blasform eingebracht wird, der eingelegte Kunststoffschlauch über einen zustellbaren Blasdorn (57) durch Überdruck gemäss der Kavität aufgeblasen und dann entformt wird,
wobei vorgesehen ist,
- dass ein mehrteiliges Blasformwerkzeug (11) mit mehreren hintereinander angeordneten Werkzeugsegmenten bereitgestellt wird, von welchen Werkzeugsegmenten wenigstens ein erstes Werkzeugsegment (13) einstückig und ein zweites und drittes Werkzeugsegment (15, 17) zweigeteilt ist
- dass das erste Werkzeugsegment (13) einen axialen Durchgang (31) besitzt mit einer ersten und einer zweiten Öffnung (33,35), welcher Durchgang (31) eine erste Kavität (37) zur Bildung eines nahtlosen Hohlkörperabschnitts definiert,
- dass das zweite zweigeteilte Werkzeugsegment (15) in der Blasposition eine zweite Kavität (19) definiert, die an die erste Öffnung (33) des Durchgangs (31) anschliesst und der Bildung eines Kopfteils des Hohlkörpers dient,
- dass das dritte zweigeteilte Werkzeugsegment (17) in der Blasposition eine dritte Kavität (21) definiert, die an die zweite Öffnung (35) des Durchgangs (31) anschliesst und der Bildung eines Bodens des Hohlkörpers dient,
- dass der extrudierte Kunststoffschlauch (53) in den axialen Durchgang (31) des ersten Werkzeugsegments (13) eingebracht wird und die oben und unten aus der ersten Kavität ragenden Abschnitte des extrudierten Kunststoffschlauchs von den an das erste Werkzeugsegment (13) angrenzenden zweiten und dritten zweigeteilten Werkzeugsegmenten (15, 17) umfasst werden, und
- dass der Kunststoffschlauch zu einem Hohlkörper gemäss der durch die Kavitäten der einzelnen Werkzeugsegmente (13, 15,17) bestimmten Form aufgeblasen wird, siehe Ansprush 1
**dadurch gekennzeichnet, dass** das Kopfteil einen Hals- und Schalterbereich umfasst, und
dass das zweite Werkzeugsegment (15) zur Herstellung des Hals- und Schulterbereichs ausgelegt ist.

8. Verfahren nach Anspruch 7, **dadurch gekennzeichnet, dass** der extrudierte Schlauch (53) durch den Blasdom (57) und den Extruderkopf (49) geführt ist.

9. Verfahren nach einem der Ansprüche 7 oder 8, **dadurch gekennzeichnet, dass** der extrudierte Schlauch (53) senkrecht in das Blasformwerkzeug eingebracht und nach dem Schliessen der zweigeteilten Werkzeugsegmente (15,17) ein Blasdorn (57) von unten in die Mündung (20) des Blasformwerkzeugs eingefahren wird.

10. Verfahren nach einem der Ansprüche 7 bis 9, **dadurch gekennzeichnet, dass** der Boden des Hohlkörpers im Bereich der Nahtstelle zwischen dem dritten und dem angrenzenden Werkzeugsegment abgeschnitten wird, wobei durch das offene Längsende die vorgesehene Menge einer pastösen, flüssigen, pulverförmigen oder rieselfähigen Masse in den Körper des Halbzeugs abgefüllt werden kann.

11. Hohlkörper hergestellt durch ein Blasformwerkzeug nach einem der Ansprüche 1 bis 6, insbesondere in Gestalt einer Tube, mit einem mindestens teilweise nahtlosen Hohlkörper und einem Hohlkörperkopfteil, welches Kopfteil eine Schulter und einen Hals mit einer Auslassöffnung umfasst,
**dadurch gekennzeichnet,**
**dass** die Schulter und der Hals des Hohlkörpers durch ein zweiteiliges Werkzeugsegment (15) nach einem der Ansprüche 1 bis 6 hergestellt sind.

12. Hohlkörper nach Anspruch 11, **dadurch gekennzeichnet, dass** der Hohlkörper eine Tube ist, welche durch Extrusionsblasformen hergestellt ist und dass der Hohlkörper einen ersten nahtlosen Hohlkörperabschnitt und einen zweiten an den ersten Hohlkörperabschnitt anschliessenden zweiten Hohlkörperabschnitt aufweist, welcher zusammen mit der Schulter und dem Hals herstellbar ist.

13. Hohlkörper nach einem der Ansprüche 11 oder 12, **dadurch gekennzeichnet, dass** der erste Hohlkörperabschnitt rund oder oval und der zweite Hohlkörperabschnitt oval, vier-, fünf-, sechs, sieben-, oder achteckig ist.

14. Extrusionsblasmaschine zur Herstellung von Hohlkörpern, insbesondere von Tuben, mit einem Extruderkopf mit einer Extrusionsdüse, wenigstens einem Blasdorn, einem Blasformwerkzeug gemäss einem der Ansprüche 1 bis 6 und Antriebsmitteln, um die zweigeteilten Werkzeugsegmente von einer Offen-Endposition in eine Geschlossen-End- oder Blasposition zu bewegen und vice versa, weiter **gekennzeichnet dadurch, dass** das Blasformwerkzeug unterhalb der Extrusionsdüse (57) angeordnet ist derart, dass die Extrusionsdüse (57) und der Durchgang (31) des einstückigen Werkzeugsegments (13) auf einer Achse senkrecht untereinander angeordnet sind.

15. Extrusionsblasmaschine nach Anspruch 14, **dadurch gekennzeichnet, dass** der Extruderkopf (49) und der Blasdom (57) beweglich sind und das Blasformwerkzeug (11) stationär angeordnet ist und dass erste und zweite Hubmittel vorgesehen sind, um den Extruderkopf (49) und den Blasdom (57) anzuheben und abzusenken.

## Claims

1. Multiple blow moulding tool for producing a blow moulded hollow body, in particular a tube, made of a plastically extruded plastic tubing received by the blowing mould or of a preform with
- a first one-part tool segment (13) with an axial passage (31) with a first and a second opening (33, 35), which passage (31) defines a first cavity (37) for forming a first seamless hollow body section,
- a second two-part tool segment (15) which defines in the blowing position a second cavity (19) which connects to the first opening (33) of the passage (31) and serves for forming a head part of the hollow body and
- a third two-part tool segment (17), which defines in the blowing position a third cavity (21), whichconnects to the second opening (35) of the passage (31) and serves for forming a bottom part of the hollow body,
**characterized in**
**that** the head part comprises a neck and shoulder area and that the second tool segment (15) is designed for producing the neck and shoulder area.

2. Blow moulding tool according to claim 1, **characterized in that** the second cavity defines a second hollow body section which follows the first hollow body section and a shoulder with an outlet which follows the secondhollow body section.

3. Blow moulding tool according to claim 1 or 2, **characterized in that** the first or second tool segment (15) has a mouth (20) into which a blowing mandrel (57) can be introduced.

4. Blow moulding tool according to any of the claims 1 to 3, **characterized in that** the two-part tool segments (15, 17) comprise respectively a first and a second tool half (15a, 15b; 17a, 17b).

5. Blow moulding tool according to any of the claims 1 to 4, **characterized in that** the first cavity (37) of the first tool segment (13) has configured on the inner wall recesses or elevations and/or the first cavity (37) has in the edge area of the first opening (33) one or several recesses, for example configured as grooves, for producing hollow bodies with elevations.

6. Blow moulding tool according to any of the claims 1 to 5, **characterized in that** the axial passage (31) of the first tool segment (13) has a circular, an oval or a polygonal cross-section (for example triangular, square, pentagonal, hexagonal etc.).

7. Method for producing a hollow body, in particular a tube, in an extrusion blow moulding method, for which a plastic tubing (53) extruded by an extruder head is introduced into a cavity of a blowing mould, the inserted plastic tubing is blown by overpressure according to the cavity by an adjustable blowing mandrel (57) and then deformed,
whereby it is provided
- that a multiple blow moulding tool (11) with several tool segments placed the one behind the other is made available, tool segments among which at least a first tool segment (13) is made of one part and a second and a third tool segment (15, 17) are made of two parts,
- that the first tool segment (13) has an axial passage (31) with a first and a second opening (33, 35), which passage (31) defines a first cavity (37) for forming a seamless hollow body section,
- that the second two-part tool segment (15) defines in the blowing position a second cavity (19) which connects to the first opening (33) of the passage (31) and serves for forming a head part of the hollow body and
- that the third two-part tool segment (17) defines in the blowing position a third cavity (21) which connects to the second opening (35) of the passage (31) and serves for forming a bottom part of the hollow body,
- that the extruded plastic tubing (53) is introduced into the axial passage (31) of the first tool segment (13) and the sections of the extruded plastic tubing which project from the first cavity on top and bottom are compassed by the second and third two-part tool segments (15, 17) adjacent to the first tool segment (13)
and
- that the plastic tubing is blown to a hollow body according to the shape determined by the cavities of the single tool segments (13, 15, 17),
- that the head part comprises a neck and shoulder area and that the second tool segment (15) is designed for producing the neck and shoulder area.

8. Method according to claim 7, **characterized in that** the extruded tubing (53) is guided by the blowing mandrel (57) and the extruder head (49).

9. Method according to one of the claims 7 or 8, **characterized in that** the extruded tubing (53) is introduced perpendicularly into the blow moulding tool and that after the closing of the two-part tool parts (15, 17) a blowing mandrel (57) is introduced from below into the mouth (20) of the blow moulding tool.

10. Method according to any of the claims 7 to 9, **characterized in that** the bottom of the hollow body is cut in the area of the seam between the third and the adjacent tool segment, whereby the planned quantity of a pasty, liquid, powdery or pourable mass can be filled through the open longitudinal end into the body of the semifinished product.

11. Hollow body produced by a blow moulding tool according to any of the claims 1 to 6, in particular configured as a tube, with a at least partially seamless hollow body and a hollow body head part, which head part comprises a shoulder and a neck with an outlet opening,
**characterized in**
**that** the shoulder and the neck of the hollow body are produced by a two-part tool segment (15) according to any of the claims 1 to 6.

12. Hollow body according to claim 11, **characterized in that** the hollow body is a tube which is produced by extrusion blowing moulds and that the hollow body has a first seamless hollow body section and a second hollow body section following the first hollow body section which can be produced together with the shoulder and the neck.

13. Hollow body according to any of the claims 11 or 12, **characterized in that** the first hollow body section is circular or oval and the second hollow body section is oval, square, pentagonal, hexagonal, heptagonaloroctagonal.

14. Extrusion blowing machine for producing hollow bodies, in particular tubes, with an extruder head with an extrusion nozzle, at least one blowing mandrel, a blow moulding tool according to any of the claims 1 to 6 and with driving means in order to move the two-part tool segments from an open end position to a closed end or blowing position and inversely, further **characterized in that** the blow moulding tool is placed below the extrusion nozzle (57) in such a manner that the extrusion nozzle (57) and the passage (31) of the one-part tool segment (13) are placed perpendicularly the one below the other on an axis.

15. Extrusion blowing machine according to claim 14, **characterized in that** the extruder head (49) and the blowing mandrel (57) are movable and that the blow moulding tool (11) is placed fixedly and that first and second lifting means are provided to lift and lower the extruder head (49) and the blowing mandrel (57).

## Revendications

1. Outil pour soufflage en plusieurs parties pour fabriquer un corps creux formé par soufflage, en particulier un tube, constitué par un tuyau flexible en matière plastique extrudé de manière plastique, reçu par le soufflage, ou par une préforme avec
- un premier segment d'outil en une partie (13) avec un passage axial (31) avec une première et une seconde ouverture (33, 35), lequel passage (31) définit une première cavité (37) pour former une première section de corps creux sans soudure,
- un second segment d'outil en deux parties (15) qui définit une seconde cavité (19) dans la position de soufflage, cavité qui se rattache à la première ouverture (33) du passage (31) et qui sert à la formation d'une partie supérieure du corps creux et
- un troisième segment d'outil en deux parties (17) qui définit une troisième cavité (21) dans la position de soufflage, cavité qui se rattache à la seconde ouverture (35) du passage (31) et qui sert à la formation d'une partie de fond du corps creux,
**caractérisé en ce**
**que** la partie supérieure comprend une zone de col et d'épaule etque lesecond segment d'outil (15) est conçu pour fabriquer la zonede col et d'épaule.

2. Outil pour soufflage selon la revendication 1, **caractérisé en ce que** la seconde cavité définit une seconde section de corps creux qui se rattache à la première section de corps creux et une épauleavec une sortie, épaule qui se rattache à la seconde section de corps creux.

3. Outil pour soufflage selon la revendication 1 ou 2, **caractérisé en ce que** le premier ou le second segment d'outil (15) possède une embouchure (20) dans laquelle un mandrin de soufflage (57) peut être introduit.

4. Outil pour soufflage selon l'une des revendications 1 à 3, **caractérisé en ce que** les segments d'outil en deux parties (15, 17) comprennent chacun une première et une seconde moitié d'outil (15a, 15b ; 17a, 17b).

5. Outil pour soufflage selon l'une des revendications 1 à 3, **caractérisé en ce que** lapremière cavité (37) dupremier segment d'outil (13) a formé des évidements ou des rehaussements sur la paroi intérieure et/ou la première cavité (37) présente un ou plusieurs évidements, par exemple en forme de rainures, dans la zone marginale de la première ouverture (33) pour fabriquer des corps creux avec des rehaussements.

6. Outil pour soufflage selon l'une des revendications 1 à 5, **caractérisé en ce que** le passage axial (31) du premier segment d'outil (13) est de section circulaire, ovale ou polygonale (par exemple triangulaire, carrée, pentagonale, hexagonale etc.

7. Procédé pour la fabrication d'un corps creux, en particulier d'un tube, dans un procédé d'extrusion-soufflage pour lequel un tuyau flexible en matière plastique (53) extrudé par une tête extrudeuse est introduit dans une cavité d'un soufflage, le tuyau flexible en plastique inséré est soufflé par un mandrin de soufflage réglable (57) par surpression selon la cavité et est ensuite déformé, cependant qu'il est prévu
- qu'un outil pour soufflage en plusieurs parties (11) avec plusieurs segments d'outil placés l'un derrière l'autre est mis à disposition, segments d'outil parmi lesquels au moins un premier segment d'outil (13) est en une partie et un second et un troisième segment d'outil (15, 17) est en deux parties,
- que le premier segment d'outil (13) possède un passage axial (31) avec une première et une seconde ouverture (33, 35), lequel passage (31) définit une première cavité (37) pour former une section de corps creux sans soudure,
- que le second segment d'outil en deux parties (15) qui définit une seconde cavité (19) dans la position de soufflage, cavité qui se rattache à la première ouverture (33) du passage (31) et qui sert à la formation d'une partie supérieure du corps creux,
- que letroisième segment d'outil en deux parties (17) qui définit une troisième cavité (21) dans la position de soufflage, cavité qui se rattache à la seconde ouverture (35) du passage (31) et qui sert à la formation d'une partie de fond du corps creux,
- que le tuyau flexible extrudé en plastique (53) est introduit dans le passage axial (31) du premier segment d'outil (13) et les sections du tuyau flexible extrudé en plastique qui sont saillie en haut et en bas de la première cavité sont entourés par le second et le troisième segment d'outil (15, 17) adjacents au premier segment d'outil (13) et
- que le tuyau flexible en plastique est soufflé en un corps creux selon la forme déterminée par les cavités des différents segments d'outil (13, 15, 17),
que la partie supérieure comprend une zone de col et d'épaule et
que lesecond segment d'outil (15) est conçu pour fabriquer la zonede col et d'épaule.

8. Procédé selon la revendication 7, **caractérisé en ce que** le tuyau flexible extrudé (53) est guidé par le mandrin de soufflage (57) et la tête extrudeuse (49).

9. Procédé selon l'une des revendications 7 ou 8, **caractérisé en ce que** le tuyau flexible extrudé (53) est introduit verticalement dans l'outil pour soufflage et qu'après la fermeture des segments d'outil en deux parties (15, 17) un mandrin de soufflage (57) est introduit par le bas dans l'embouchure (20) de l'outil pour soufflage.

10. Procédé selon l'une des revendications 7 à 9, **caractérisé en ce que** le fond du corps creux est sectionné dans la zone de la jonction entre le troisième segment d'outil et le segment d'outil adjacent, cependant que la quantité prévue dune masse pâteuse, liquide, en forme de poudre ou capable coulante peut être déversée dans le corps du produit semi-fini par l'extrémité longitudinale ouverte.

11. Corps creux fabriqué par un outil pour soufflage selon l'une des revendications 1 à 6, en particulier en forme de tube, avec un corps creux au moins partiellement sans soudure et une partie supérieure de corps creux, laquelle partie supérieure comprend une épaule et un col avec une ouverture de sortie,
**caractérisé en ce**
**que** l'épaule et le col du corps creux sont fabriqués par un segment d'outil en deux parties (15) selon l'une des revendications 1 à 6.

12. Corps creux selon la revendication 11, **caractérisé en ce que** le corps creux est un tube qui est fabriqué par extrusion-soufflage et que le corps creux présente une première section de corps creux sans soudure et une seconde section de corps creux qui se rattache à la première section de corps creux qui peut être fabriquée ensemble avec l'épaule et le col.

13. Corps creux selon l'une des revendications 11 ou 12, **caractérisé en ce que** la première section de corps creux est ronde ou ovale et laseconde section de corps creux est ovale, carrée, pentagonale, hexagonale, heptagonale ou octogonale.

14. Machine d'extrusion-soufflage pour la fabrication de corps creux, en particulier de tubes, avec une tête extrudeuse avec une filière d'extrudeuse, au moins un mandrin de soufflage, un outilde soufflage selon l'une des revendications 1 à 6 et des moyens d'entraînement pour déplacer les segments d'outil en deux parties d'une position d'extrémité ouverte en une position d'extrémité fermée ou position de soufflage et vice-versa, **caractérisée en ce que** l'outil de soufflage est placé en dessous de la filière d'extrusion (57) de telle manière que lafilière d'extrusion (57) et le passage (31) dusegment d'outil en une partie (13) sont placés sur un axe perpendiculaire l'un à l'autre.

15. Machine d'extrusion-soufflage selon la revendication 14, **caractérisée en ce que** la tête d'extrudeuse (49) et le mandrin de soufflage (57) sont mobiles et l'outil de soufflage (11) est placé stationnaire et que des premiers et des seconds moyens de levage sont prévus pour lever et abaisser la tête d'extrudeuse (49) et le mandrin de soufflage (57).
